# EUROPÄISCHE PATENTANMELDUNG

(11) **EP 4 670 512 A1**
(43) Veröffentlichungstag der Anmeldung: **31.12.2025**
(21) Anmeldenummer: 24184226.9
(22) Anmeldetag: 25.06.2024
(51) Int. Cl.: A23L 19/00, A23L 3/40

(54) **VERFAHREN ZUR HERSTELLUNG VON MIT WASSER REDISPERGIERBARER NAHRUNGSMITTELZUBEREITUNGEN IN TROCKENER FORM**

(71) Anmelder: DMK Deutsches Milchkontor GmbH, 27404 Zeven (DE)
(72) Erfinder: HILKER, Nils, 20146 Hamburg (DE)
(74) Vertreter: Fabry, Bernd

(57) **Zusammenfassung**

Vorgeschlagen wird ein Verfahren zur Herstellung von mit Wasser redispergierbarer Nahrungsmittelzubereitungen in trockener Form, umfassend oder bestehend aus den folgenden Schritten:
(a) Bereitstellen einer wässrigen Nahrungsmittelzubereitung;
(b) schonendes Erwärmen der Zubereitung aus Schritt (a) auf Temperaturen im Bereich von etwa 50 bis etwa 100 °C über einen Zeitraum von etwa 1 bis etwa 30 Minuten;
(c) schonende Trocknung der Zubereitung aus Schritt (b) bei Temperaturen im Bereich von etwa 50 bis etwa 80 °C;
(d) Bereitstellung einer wasserundurchlässigen Leichtverpackung;
(e) Abfüllen der getrockneten Zubereitung aus Schritt (c) in die Kunststoffverpackung aus Schritt (d); und
(f) Verschließen der befüllten Verpackung aus Schritt (e).

## Beschreibung

### GEBIET DER ERFINDUNG

Die vorliegende Erfindung befindet sich auf dem Gebiet der Verpackung und betrifft ein Verfahren zur Bereitstellung einer verbesserten Darreichungsform für Nahrungsmittel, insbesondere für die Kleinkindernährung.

### TECHNOLOGISCHER HINTERGRUND

Derzeit werden fertige Menüs für die Kleinkindernährung überwiegend in schweren Glasverpackungen angeboten. Die Anbietungsform ist wenig nachhaltig, da die Gläser selten beim Altglas landen, sondern final entsorgt werden. Durch das hohe Transportgewicht wird für den Handel und die Industrie die CO2-Bilanz verschlechtert und für den Käufer der Einkauf buchstäblich schwerer. Ferner besteht bei der Handhabung die Gefahr von Glasbruch und damit auch die Gefahr von Glassplittern im Essen. Beim Erwärmen einer solchen Glasverpackung erwärmt sich diese zudem im Ganzen, so dass die Entnahme beispielsweise aus einer Mikrowelle erschwert wird.

Auch die Herstellung derartiger Produkte ist nicht ohne Probleme. So müssen die Gemüse- und Fruchtzubereitungen einer Hochtemperaturbehandlung und haltbar gemacht werden, wodurch die Produkte Textur, Geschmack und wichtige Inhaltsstoffe, z.B. Vitamine verlieren. Da zwischen Herstellung, Auslieferung, Kauf und Verzehr der Produkte eine längere Zeitspanne liegen kann, ist eine hinreichende Haltbarkeit der Zubereitungen erforderlich. Der dazu erforderliche Zusatz von Konservierungsmitteln ist jedoch bei vielen Verbrauchern unerwünscht.

### STAND DER TECHNIK

Aus dem Stand der Technik sind Schlauchbeutel ("Pouch") als Verpackung für beispielsweise Waschmittel, Katzenfutter, Tabak und flüssige Lebensmittel bekannt:

WO 1999 064308 A1 (IDEA PACK) betrifft einen wiederverschließbaren Beutel mit einer Vorder- und einer Rückseite, deren Seitenränder miteinander versiegelt sind. Die Rückseite überragt die Vorderseite unter Bildung einer Verschlusslasche und bildet zusammen mit einer Oberkante der Vorderseite eine Beutelöffnung, die bei der Herstellung oder Befüllung des Beutels durch eine Siegelkante verschlossen wird. Es ist eine Aufreißnaht vorgesehen, die beim erstmaligen Öffnen des Beutels aufreißbar ist und beim Aufreißen eine Zugangsöffnung bildet. Die Verschlusslasche kann über den oberen Rand der Vorderseite gefaltet werden, so dass sie diese Öffnung abdeckt und in dieser Position reversibel fixiert werden kann. Die Siegelnaht und die Aufreißnaht werden gemeinsam durch eine Schließnaht verkörpert, die sich unterhalb der Oberkante der Vorderseite im Abstand zu dieser erstreckt. Die Vorderseite bildet zwischen der Schließnaht und der Oberkante eine Aufreißlasche, die zusammen mit der Schließlasche ein Greifmittel zum Aufreißen der Schließkante bildet.

EP 2050689 A1 (HUHTAMAKI) beansprucht einen Beutel mit einer Lage, die mit einer Perforationslinie versehen ist, die zwischen zwei Grenzbereichen verläuft, wobei die Linie in der oberen Hälfte, vorzugsweise in zwei Dritteln bis drei Vierteln der Höhe des Beutels, angeordnet ist. Die Endpunkte der Linie sind mit einer Schweißnaht versehen, und oberhalb der Linie ist ein Tragegriff angeordnet. Eine Folienbahn aus Kunststoff ist im Griffbereich gefaltet und die Seitenkanten der Bahn sind miteinander verschweißt und werden von einer Faltung (2) weggeführt. Die Linie ist parallel zur Faltung angeordnet und durch Verschweißen der Kanten begrenzt.

DE19951357 A1 (HENKEL) offenbart eine Verpackung bestehend aus einem Schlauchbeutel aus einem flexiblen Material mit im gefüllten Zustand flachen Enden, die aus mindestens zwei flach aufeinanderliegenden Beutelseitenabschnitten gebildet sind, die durch eine im Wesentlichen querzur Beutelquerachse verlaufende Siegelnaht miteinander verbunden sind und eine nach innen gerichtete Perforationslinie im flachen Beutelende aufweisen.

### AUFGABE DER ERFINDUNG

Daher hat die Aufgabe der vorliegenden Erfindung darin bestanden, Nahrungsmittel speziell für die Kleinkindernährung in einer solchen Form zur Verfügung zu stellen, dass die geschilderten Nachteile des Stands der Technik vermieden werden. Die Produkte sollten ein geringes Gewicht aufweisen, nachhaltig in Produktion und Verpackung sein, die volle Qualität der Ausgangsstoffe aufweisen und haltbar über einen Zeitraum von mindestens 4 Wochen ohne Zusatz von Konservierungsmitteln sein.

### GEGENSTAND DER ERFINDUNG

Der Gegenstand der Erfindung betrifft ein Verfahren zur Herstellung von mit Wasser redispergierbarer Nahrungsmittelzubereitungen in trockener Form, umfassend oder bestehend aus den folgenden Schritten:
(a) Bereitstellen einer wässrigen Nahrungsmittelzubereitung;
(b) schonendes Erwärmen der Zubereitung aus Schritt (a) auf Temperaturen im Bereich von etwa 50 bis etwa 100 °C über einen Zeitraum von etwa 1 bis etwa 30 Minuten;
(c) schonende Trocknung der Zubereitung aus Schritt (b) bei Temperaturen im Bereich von etwa 5 bis etwa 50 °C;
(d) Bereitstellung einer wasserundurchlässigen Leichtverpackung;
(e) Abfüllen der getrockneten Zubereitung aus Schritt (c) in die Kunststoffverpackung aus Schritt (d); und
(f) Verschließen der befüllten Verpackung aus Schritt (e).

Das erfindungsgemäße Verfahren umfasst drei wesentliche Merkmale, nämlich die schonende Erwärmung auf maximal 100 °C, die ebenfalls schonende Entwässerung bei maximal 50°C und das Abfüllen des getrockneten Produktes in eine Leichtverpackung, die das Produkt gegen Feuchtigkeitseinwirkung schützt und vorzugsweise aus Kunststoff besteht, insbesondere ein Sachet oder einen Pouchebeutel. Das Verfahren kommt ohne eine Hochtemperaturerhitzung aus, da dem Produkt anschließend das Wasser und damit die Grundlage für ein Keimwachstum entzogen wird. Auf diese Weise bleiben Textur, Geschmack und Inhaltsstoffe der Ausgangszubereitung erhalten: Gemüse- und Fruchtstücke bleiben bissfest und zerfallen nicht, Vitamine werden nicht zerstört. Die Trocknung erfolgt ebenfalls unter milden Bedingungen, vorzugsweise durch Kondensationstrocknung, was dazu führt, dass sowohl das Wasser vollständig entfernt wird, als die Bestandteile der Zubereitung nicht in Mitleidenschaft gezogen werden. Gleichzeitig wird die Haltbarkeit der Produkte in der gewünschten Weise so verbessert, dass der Zusatz von Konservierungsmitteln nicht mehr erforderlich ist. Die Verwendung von Sachets oder insbesondere Pouchebeutel als Verpackung vermeidet ferner die Probleme, die mit Glasverpackungen verbunden sind, also Umweltbelastung, Gewicht beim Einkaufen und Splittergefahr. Zudem kann ein recyclebares Verpackungsmaterial verwendet werden. So liefert das erfindungsgemäße Verfahren durch eine Kombination verschiedener an sich bekannter Schritte ein Produkt in einer Verpackung, die gemeinsam das komplexe Anforderungsprofil vollständig erfüllen.

Um mit der Nahrungsmittelzubereitung eine Mahlzeit zuzubereiten, braucht der Inhalt nur in Wasser redispergiert und erwärmt zu werden.

### Nahrungsmittel

In einer bevorzugten Ausführungsform der vorliegenden Erfindung liegen die Nahrungsmittel als halbflüssige bis pastöse, speziell breiartige Lebensmittel vor, wie sie beispielsweise für die Ernährung von Kleinkindern Anwendung finden. Diese können Gemüse- bzw. Fruchtstücke enthalten, die der Zubereitung die gewünschte Textur und Geschmack verleihen. Vorzugsweise handelt es sich daher um Babybreie oder fertige Menüs für Kleinkinder oder Menschen, die auf Speisen dieser Art angewiesen sind.

### Schonende Erwärmung

Unter schonender Erwärmung ist in Abgrenzung zur sonst üblichen Hochtemperaturbehandlung zu verstehen, dass die Nahrungsmittelzubereitungen für etwa 1 bis etwa 30 Minuten auf etwa 50 bis etwa 100 °C erwärmt werden. Vorzugsweise findet die Behandlung über etwa 10 bis etwa 15 Minuten bei einer Temperatur von etwa 70 bis etwa 80 °C statt. Diese Bedingungen reichen aus, um die "rohen" Bestandteile zu kochen, ohne dass Textur, Geschmack und Inhaltsstoffe verloren gehen. Eine höhere Temperatur - beispielsweise im Sinne einer Pasteurisierung - wie aus dem Stand der Technik bekannt, ist nicht erforderlich, da den Zubereitungen im folgenden Schritt das Wasser und damit der Nährboden für Keime entzogen wird.

### Schonende Trocknung

Unter schonender Trocknung ist in Abgrenzung zur sonst üblichen Sprühtrocknung, die bei Temperaturen um 180 °C stattfindet, zu verstehen, dass die zuvor erwärmten Nahrungsmittelzubereitungen bei Temperaturen im Bereich von etwa 5 bis etwa 50 °C und insbesondere etwa 10 bis etwa 30 °C durchführt. Der Verfahrensschritt kann dabei als Kondensationstrocknung, Kontakttrocknung, Gefriertrocknung, Wirbelschichttrocknung oder dielektrische Trocknung oder als Kombination solcher Verfahren ausgelegt sein.

Besonders bevorzugt ist die Kondensationstrocknung, wie man sie auch aus der Wäschetrocknung kennt. Dazu wird feuchte Luft mittels Ventilatoren über Kühlrippen- oder Kühllamellen geführt, deren Temperatur unter dem Taupunkt der Luft liegt. Dabei kondensiert das Wasser und sammelt sich als Kondenswasser an der kalten Oberfläche, welches in einem separaten Behälter gesammelt wird. Die abgekühlte und entfeuchtete Luft wird anschließend erwärmt und als Trockenluft abgegeben. Der bevorzugte Temperaturbereich liegt hier bei etwa 5 bis etwa 30 °C, wobei die Feuchtigkeit des zu trocknenden Produktes zwischen 40 und 99 % liegen kann. In der Regel werden die Zubereitungen auf einen Wassergehalt unter 5 Gew.-%, vorzugsweise von etwa 0,5 bis etwa 1 Gew.-% abgetrocknet.

### Sachets

Bei den Trocknungsprodukten handelt es sich um trockene Pulver, die noch Gemüse- bzw. Fruchtstücke in ebenfalls entwässerter Form enthalten können. Die Produkte werden anschließend in eine Kunststoffverpackung abgefüllt und diese dann verschlossen. In einer ersten Ausführungsform der Erfindung kann es sich dabei um Sachets handeln. Hierunter versteht man Kunststoffbeutel aus einem wasserlöslichen und nahrungsmitteltauglichen Polymer, wie beispielsweise PVP. Die Beutel werden in einer definierten Menge Wasser aufgelöst und setzen den Inhalt frei.

### Pouchbeutel

In einer zweiten und bevorzugten Ausführungsform werden die getrockneten Zubereitungen in Schlauch- oder Pouchbeutel abgefüllt. Diese werden in der Regel dazu verwendet, flüssige Produkte zu verpacken. Solche Produkte können Nahrungsmittel, Getränke, flüssige Waschmittel und dergleichen sein. Von besonderer Bedeutung ist, dass diese in jedem Fall hermetisch dicht sein müssen. Pouchbeutel bestehen aus zwei Seitenwandzuschnitten, die mit einem Bodenzuschnitt mit Hilfe von Schweißnähten fest verbunden sind. Die Schweißnaht, die den Bodenzuschnitt mit jeweils einem Wandzuschnitt verbindet, hat auf dem flach gelegten Boden eine etwa halbkreisförmige oder halbelliptische Gestalt. Die Längsschweißnähte laufen am fertigen Pouchbeutel über den Bodenzuschnitt durch, wodurch die Bodenfalte die der Boden zwischen den Seitenwandabschnitten bildet, fixiert wird. Gleichzeitig entsteht ein Rand, der es gestattet, den Pouchbeutel in gefülltem Zustand aufzustellen.

Zur Herstellung der leeren Pouchbeutel werden die beiden Seitenwandzuschnitte übereinandergelegt. Zwischen die beiden Seitenwandzuschnitte wird der gefaltete Bodenzuschnitt eingefügt. Der so gebildete Stapel wird thermisch verschweißt, wobei sämtliche Schweißnähte mit Ausnahme der letzten, den Beutel verschließenden Schweißnaht, die nach dem Füllen angebracht wird, simultan erzeugt werden. Die verwendete Folie ist vorzugsweise mehrschichtig und besteht aus einem Material, das die rückstandsfreie Entnahme erleichtert und zur Verwendung von Lebensmitteln geeignet ist. Mit Hilfe des Temperaturgradienten über die Foliendicke wird festgelegt, wo eine Verschweißung auftritt. Dadurch wird insbesondere sichergestellt, dass sich die Bodenfalte nach dem Herstellen des Pouchbeutels im Bodenbereich wieder öffnen kann, um die Standfläche zu erzeugen und das Füllvolumen zu vergrößern. Im oberen Bereich weisen die Beutel in der Regel eine oder zwei gegenüberliegende Kerben zum erleichterten Aufreißen des Beutels auf.

In einer bevorzugten Ausführungsform zeichnen sich die Zubereitungen dadurch aus, dass jeweils eine obere und eine untere auf der gleichen Seite des Pouchbeutels befindliche Ecke als Grifffläche ausgestaltet sind. In einer weiteren bevorzugten Ausführungsform zeichnen sich die Zubereitungen dadurch aus, dass der Pouchbeutel eine an seinem unteren Ende befindliche Vorrichtung aufweist, mit der er zur vollständigen Entnahme aufgerollt werden kann. Es ist zudem möglich, den Pouchbeutel wiederverschließbar auszustatten. Üblicherweise werden die Pouchbeutel zu 50 bis 95 % und vorzugsweise zu 80 bis 95 % ihres Volumens mit dem Nahrungsmittel gefüllt.

### BEISPIELE

### Vergleichsbeispiel V1

10 kg Karotten und 5 kg mehlig kochende Kartoffeln wurden in kleine Stücke geschnitten und mit 10 L Wasser für etwa 15 Minuten in sprudelndem Wasser gekocht. Es wurden 1 kg Getreideflocken zugegeben und weitere 5 Minuten gekocht. Dann wurde die Mischung abgekühlt, mit 200 mL Rapsöl und 500 mL Orangensaft versetzt und homogenisiert. Die breiartige Mischung wurde dann bei 180 °C Kopftemperatur in einer Technikumsanlage sprühgetrocknet und das trockene Pulver, das noch eine Restfeuchte von 2 Gew.-% aufwies in Schlauchbeutelverpackungen abgefüllt. Diese wurde anschließend 2 Wochen bei 20 °C gelagert und dann in Wasser redispergiert. Anschließend erfolgte die Verkostung durch 5 erfahrene Lebensmittelchemiker. Das Produkt wurde übereinstimmend als fade mit ranzigem Unterton bewertet.

### Vergleichsbeispiel V1

Vergleichsbeispiel V1 wurde wiederholt, dem Ansatz nach der Homogenisierung jedoch 25 g des Konservierungsmittels Kaliumsorbat zugegeben. Nach Lagerung und Wasserzugabe wurde das Produkt geschmacklich als fade beschrieben, war jedoch frei von einem ranzigen Unterton.

### Beispiel 1

Vergleichsbeispiel V1 wiederholt, die Zubereitung jedoch nur 10 Minuten bei 75 °C gekocht. Anschließend wurde das Produkt homogenisiert, wobei im Brei noch feste Gemüsestücke erkennbar waren. Danach erfolgte die Kondensationstrocknung bei 10 °C und das Abfüllen in die Schlauchbeutel. Auch diese Charge wurde 2 Wochen bei 20 °C gelagert und dann in Wasser redispergiert. Anschließend erfolgte die Verkostung durch 5 erfahrene Lebensmittelchemiker. Das Produkt wurde übereinstimmend als frisch ohne ranzigen Unterton bewertet.

Die Versuche zeigen, dass Zubereitungen, die hoch erhitzt und anschließend ebenfalls bei hohen Temperaturen getrocknet, nach dem Redispergieren in Wasser einen faden Geschmack aufweisen. Die Textur ist einheitlich, d.h. es finden sich keine Gemüse- oder Fruchtstücke darin. Ohne Zusatz von Konservierungsmitteln weisen die Produkte zudem einen ranzigen Nachgeschmack auf.

Demgegenüber führt das erfindungsgemäße Verfahren auch ohne Zugabe von Konservierungsstoffen zu einem Produkt mit der gewünschten Textur, in dem noch Gemüse- und Fruchtstücke vorhanden sind und das auch nach längerer Lagerung noch einen frischen Geschmack aufweist.

## Patentansprüche

1. Verfahren zur Herstellung von mit Wasser redispergierbarer Nahrungsmittelzubereitungen in trockener Form, umfassend oder bestehend aus den folgenden Schritten:
(a) Bereitstellen einer wässrigen Nahrungsmittelzubereitung;
(b) schonendes Erwärmen der Zubereitung aus Schritt (a) auf Temperaturen im Bereich von etwa 50 bis etwa 100 °C über einen Zeitraum von etwa 1 bis etwa 30 Minuten;
(c) schonende Trocknung der Zubereitung aus Schritt (b) bei Temperaturen im Bereich von etwa 5 bis etwa 50 °C;
(d) Bereitstellung einer wasserundurchlässigen Leichtverpackung;
(e) Abfüllen der getrockneten Zubereitung aus Schritt (c) in die Kunststoffverpackung aus Schritt (d); und
(f) Verschließen der befüllten Verpackung aus Schritt (e).

2. Verfahren nach Anspruch 1, **dadurch gekennzeichnet, dass** man Nahrungsmittelzubereitungen einsetzt, die Gemüse und/oder Früchten enthalten.

3. Verfahren nach den Ansprüchen 1 und/oder 2, **dadurch gekennzeichnet, dass** man Nahrungsmittelzubereitungen einsetzt, die in flüssiger oder pastöser Form vorliegen.

4. Verfahren nach den Ansprüchen 2 und/oder 3, **dadurch gekennzeichnet, dass** man Nahrungsmittelzubereitungen einsetzt, die noch Anteile an Gemüse und/oder Früchten in stückiger Form enthalten.

5. Verfahren nach mindestens einem der Ansprüche 1 bis 4, **dadurch gekennzeichnet, dass** man Nahrungsmittelzubereitungen einsetzt, bei denen es sich um einen Babybrei oder ein Menü für Kleinkinder sowie Menschen handelt, die auf Speisen dieser Art angewiesen sind.

6. Verfahren nach mindestens einem der Ansprüche 1 bis 6, **dadurch gekennzeichnet, dass** man die Nahrungsmittelzubereitungen aus Schritt (a) bei einer Temperatur im Bereich von etwa 70 bis etwa 80 °C über einen Zeitraum von etwa 10 bis etwa 15 Minuten erwärmt.

7. Verfahren nach mindestens einem der Ansprüche 1 bis 7, **dadurch gekennzeichnet, dass** man die erwärmten Zubereitungen aus Schritt (a) einer schonenden Trocknung im Bereich von etwa 10 bis etwa 30°C unterwirft.

8. Verfahren nach mindestens einem der Ansprüche 1 bis 8, **dadurch gekennzeichnet, dass** man die schonende Trocknung als Kondensationstrocknung, Kontakttrocknung, Gefriertrocknung, Wirbelschichttrocknung oder dielektrische Trocknung oder als Kombination solcher Verfahren durchführt.

9. Verfahren nach mindestens einem der Ansprüche 1 bis 8, **dadurch gekennzeichnet, dass** man die erwärmten Zubereitungen aus Schritt (a) bis auf einen Restwassergehalt von maximal 5 Gew.-% trocknet.

10. Verfahren nach mindestens einem der Ansprüche 1 bis 8, **dadurch gekennzeichnet, dass** man die erwärmten Zubereitungen aus Schritt (a) bis auf einen Restwassergehalt von 0,5 bis 1 Gew.-% trocknet.

11. Verfahren nach mindestens einem der Ansprüche 1 bis 10, **dadurch gekennzeichnet, dass** man die getrockneten Zubereitungen aus Schritt (c) in ein Sachet oder einen Pouchbeutel abfüllt.

12. Verfahren nach Anspruch 11, **dadurch gekennzeichnet, dass** man die Pouchbeutel wiederverschließbar ausgestaltet.
